# EUROPÄISCHE PATENTSCHRIFT

(11) **EP 3 732 949 B1**
(45) Veröffentlichungstag und Bekanntmachung des Hinweises auf die Patenterteilung: **12.11.2025**
(21) Anmeldenummer: 20150958.5
(22) Anmeldetag: 09.01.2020
(51) Int. Cl.: A01D 41/127

(54) **VERFAHREN ZUR ERNTE EINES AUF EINEM FELD ANGEORDNETEN BESTANDS ZU ERNTENDER PFLANZEN SOWIE MÄHDRESCHER**
METHOD FOR HARVESTING CROPS TO BE HARVESTED ON A FIELD AND COMBINE HARVESTER
PROCÉDÉ DE RÉCOLTE D'UN PEUPLEMENT DE PLANTES À RÉCOLTER DISPOSÉ DANS UN CHAMP ET MOISSONNEUSE-BATTEUSE

(30) Priorität: 30.04.2019 DE 102019111089
(43) Veröffentlichungstag der Anmeldung: 04.11.2020
(73) Patentinhaber: CLAAS Selbstfahrende Erntemaschinen GmbH, 33428 Harsewinkel (DE)
(72) Erfinder: Kleverth, Johannes, 48703 Stadtlohn (DE)
(74) Vertreter: CLAAS Gruppe

(56) Entgegenhaltungen:
- EP-A1- 3 259 976
- DE-A1- 102007 055 073
- DE-A1- 102013 209 197
- DE-A1- 102016 118 651

## Beschreibung

Die vorliegende Anmeldung betrifft ein Verfahren zur Ernte eines auf einem Feld angeordneten Bestands zu erntender Pflanzen mittels eines Mähdreschers gemäß dem Oberbegriff von Anspruch 1. Ferner betrifft die vorliegende Anmeldung einen selbstfahrenden Mähdrescher gemäß dem Oberbegriff von Anspruch 15.

Gemäß dem Verfahren wird der jeweilige Bestand in einzelnen Abschnitten bearbeitet. Diese sind typischerweise von einer Mehrzahl von Arbeitsspuren gebildet, die mittels des Mähdreschers sukzessive abgefahren werden bis der gesamte Bestand überstrichen ist und somit alle Pflanzen geerntet sind. Die Abschnitte sind in aller Regel in Form von in sich möglichst geraden Bahnen ausgebildet. Dabei fährt der Mähdrescher im Zuge des Verfahrens bei Beginn der Bearbeitung eines jeweiligen Abschnitts an einem Bestandsanfang in den Bestand ein und bei Beendigung der Bearbeitung des Abschnitts an einem Bestandsende wieder aus dem Bestand heraus. Daraufhin wendet der Mähdrescher außerhalb des Bestandes im Bereich eines Vorgewendes des Feldes, auf dem der Bestand steht, und nimmt sodann die Bearbeitung des nächsten Abschnitts auf.

Der "Bestandsanfang" und das "Bestandsende" markieren gewissermaßen Übergänge zwischen einem Bereich des Feldes, in dem zu erntende Pflanzen stehen, und einem Bereich des Feldes, der frei von Pflanzen ist. Der Bestandsanfang und das Bestandsende werden dabei begrifflich in Abhängigkeit von einer Bearbeitung des Bestands mittels des Mähdreschers unterschieden. Somit beschreibt der Bestandsanfang immer den Übergang, an dem der Mähdrescher bei Beginn der Bearbeitung eines jeweiligen Abschnitts in den Bestand der Pflanzen einfährt, während das Bestandsende den Übergang beschreibt, an dem der Mähdrescher bei Beendigung eines Abschnitts aus dem Bestand herausfährt. Der Bereich des Feldes außerhalb des Bestands umfasst in aller Regel das Vorgewende.

Die vorstehend beschriebene Verfahrensweise ist im Stand der Technik weitlich bekannt. Sie geht prinzipbedingt damit einher, dass ein Durchsatz von Erntegut, das mittels des Mähdreschers von dem Feld geerntet wird, bei Beendigung eines Abschnitts (und mithin im Zuge des Herausfahrens des Mähdreschers aus dem Bestand) bis auf Null abnimmt. Dabei nimmt der Erntegutdurchsatz bei Verlassen des Bestandes typischerweise nicht sprunghaft ab. Stattdessen nimmt der Erntegutdurchsatz - und mit ihm eine Schichtdicke des in dem Mähdrescher zu verarbeitenden Ernteguts - in aller Regel über einen Zeitraum hinweg sukzessive ausgehend von einem Arbeitsmaximum ab, nachdem zumindest das Schneidwerk des Mähdreschers den Bestand verlassen hat und im Bereich des Vorgewendes keine weiteren Pflanzen geerntet werden. Der Erntegutdurchsatz ist dann Null. Analog verhält es sich im Zuge des Beginns der Bearbeitung eines Abschnitts, wobei der Mähdrescher an einem Bestandsanfang in den Bestand einfährt. Hierbei nimmt der Erntegutdurchsatz über einen Zeitraum hinweg sukzessive von Null bis auf ein Arbeitsmaximum zu, wobei analog eine Schichtdicke des zu verarbeitenden Ernteguts in dem Mähdrescher stetig zunimmt.

Diese Übergangsphasen betreffend den Erntegutdurchsatz sowohl bei Ausfahren aus dem Bestand als auch beim Einfahren in den Bestand führen in vielen Fällen dazu, dass die Behandlung des Erntegutstroms mittels der verschiedenen Arbeitsorgane des Mähdreschers nicht optimal stattfindet. Somit sind beispielsweise das Dreschorgan und das Trennorgan derart konfiguriert, dass sie zur Bearbeitung eines maximalen Erntegutstroms angepasst sind und in Gegenwart der Zuführung eines solchen eine bestmögliche Trennleistung betreffend das Ablösen von Früchten von Pflanzenresten und sodann das Abscheiden der Früchte von den Pflanzenresten bewirken. Bei Vorliegen eines nicht-maximalen Erntegutstroms, wie er in der beschriebenen Weise sowohl beim Ausfahren aus dem Bestand als auch beim Einfahren in den Bestand vorliegt, kann es jedoch aufgrund der Einstellung der Arbeitsorgane zu erhöhten Fruchtverlusten kommen, die unerwünscht sind.

Um diesem Problem zu begegnen, wird beispielsweise in der deutschen Offenlegungsschrift DE 10 2007 055 073 A1 vorgeschlagen, das Dreschorgan und das Trennorgan in Abhängigkeit eines aktuellen Erntegutdurchsatzes zu steuern. Hierbei wird der Erntegutdurchsatz fortwährend erfasst, sodass bei dessen Abnahme Betriebsparameter des Dreschorgans und/oder des Trennorgan verändert werden können, um dem erhöhten Fruchtverlust entgegenzuwirken. Ferner ist es beschrieben, dass in Abhängigkeit des Erntegutdurchsatzes eine Fahrgeschwindigkeit der Erntemaschine geändert werden kann.

Ein weiteres Beispiel für einen steuerungstechnischen Eingriff in den Betrieb des Mähdreschers findet sich in der deutschen Offenlegungsschrift DE 102014 114 717 A1. Diese beschreibt die Ansteuerung des Dreschorgans in Abhängigkeit einer erfassten Motorleistung. In Abwesenheit zu erntenden Ernteguts außerhalb des Bestandes, das heißt insbesondere im Bereich eines Vorgewendes, sinkt die Motorleistung des Mähdreschers, was gemäß besagter Schrift registriert wird. In Abhängigkeit dieser Feststellung wird sodann eine Veränderung des Betriebs des Mähdreschers vorgenommen, sodass trotz abfallendem Erntegutdurchsatz die gewünschte Trennwirkung erzielt wird, infolge der die Früchte von den Pflanzen abgelöst und gesondert gesammelt werden.

Der Nachteil der bekannten Verfahrensweisen besteht darin, dass eine frühzeitige Erkennung eines abfallenden Erntegutdurchsatzes nicht vorgenommen werden kann. Dies hat zur Folge, dass Anpassungen der Betriebsparameter des Mähdreschers erst dann stattfinden können, wenn der Erntegutdurchsatz bereits im Begriff ist zu sinken oder bereits gesunken ist. Eine hierdurch bedingte Reaktion ist in der Regel verspätet, sodass weiterhin in nicht vernachlässigbarem Umfang Fruchtverluste zu beklagen sind.

Die Offenlegungsschrift DE 10 2016 118 651 A1 offenbart in diesem Zusammenhang einen Steuerprozess für das Vorgewendemanagement. Dabei werden auf Grundlage von Vorfelddaten der Erntemaschine charakteristische Boden- und Ernteguteigenschaften ermittelt und so ein unterschiedliches Heben und Senken des Schneidwerks bewirkt oder eine entsprechende Anpassung der Fahrgeschwindigkeit durchgeführt. Dabei steht im Besonderen die Ermittlung einer Fahrgasse auf Grundlage der Boden-Eigenschaften im Vordergrund, sodass die Fahrspurstrategie für die Erntemaschine effizient definiert werden kann.

Aus der Offenlegungsschrift EP 3 259 976 A1 ist ein selbstfahrender Mähdrescher bekannt, der auf Grundlage von Vorfelddaten die Beschaffenheit des Feldbestands entlang einer Fahrroute ermittelt, sodass ein Leistungsbedarf für die Verbrennungskraftmaschine prognostiziert werden kann. Dies ermöglicht eine frühzeitige Erhöhung oder Verringerung der Leistungsstufe der Verbrennungskraftmaschine.

Die Offenlegungsschrift DE 10 2013 209 197 A1 offenbart einen selbstfahrenden Mähdrescher, wobei die mittels einer Sensorik bestimmten Vorfelddaten zur Geschwindigkeitsregelung der Erntemaschine verwendet werden, um einen gewünschten Massendurchsatz der Erntemaschine einzuhalten.

Angesichts dieser Problematik besteht die Aufgabe der vorliegenden Erfindung darin, ein Verfahren bereitzustellen, mittels dessen die Fruchtverluste im Zuge des Einfahrens in den Bestand sowie des Ausfahrens aus dem Bestand verringert werden können.

Die zugrunde liegende Aufgabe wird erfindungsgemäß mittels des Verfahrens mit den Merkmalen des Anspruchs 1 gelöst. Vorteilhafte Ausgestaltungen ergeben sich aus den Unteransprüchen 2 bis 13.

Das erfindungsgemäße Verfahren ist dadurch gekennzeichnet, dass mittels mindestens einer Sensoreinrichtung ein Vorbereich des Mähdreschers erfasst wird. Diese Erfassung kann insbesondere optisch erfolgen, wobei die Sensoreinrichtung von mindestens einer Kamera gebildet ist. Mittels dieses Vorgehens sind der Bestandsanfang bzw. das Bestandsende erkennbar. Das erfindungsgemäße Verfahren sieht weiterhin vor, dass infolge dieses Erkennens des Bestandsanfangs bzw. des Bestandsendes mindestens ein Betriebsparameter des Mähdreschers zumindest zeitweise geändert wird.

Das erfindungsgemäße Verfahren hat viele Vorteile. Mittels der Erfassung des Vorbereichs des Mähdreschers wird die Möglichkeit geschaffen, eine Veränderung betreffend den Bestand bereits festzustellen, bevor sich diese faktisch in einer Veränderung des Erntegutdurchsatzes niederschlägt. Insbesondere kann die Erfassung ohne eine Messung einer Schichtdicke eines Erntegutstroms erfolgen, der in dem Mähdrescher verarbeitet wird. Der "Vorbereich" bezeichnet dabei einen Bereich, der sich in Fahrtrichtung des Mähdreschers gesehen vor dem Schneidwerk befindet. Somit ist es beispielsweise denkbar, dass ein Mähdrescher im Zuge einer Annäherung an ein Bestandsende selbiges im Vorbereich des Mähdreschers erkennt und infolgedessen bereits Vorbereitungen zur Änderung des mindestens einen Betriebsparameters treffen kann, sodass diese gleichzeitig mit einer Veränderung des Erntegutdurchsatzes wirksam werden und nicht erst im Anschluss daran.

Die Veränderung des Betriebsparameters muss mithin nicht unmittelbar auf das Erkennen des Bestandsanfangs bzw. des Bestandsendes folgen, sondern kann insbesondere mit einem zeitlichen Versatz stattfinden. In Kenntnis der Fahrgeschwindigkeit des Mähdreschers ist es beispielsweise denkbar, eine Fahrtdauer ausgehend von einer aktuellen Position des Mähdreschers bis zu dem Bestandsende zu bestimmen und angepasst an diese Fahrtdauer mindestens einen Betriebsparameter des Mähdreschers zu verändern. Mit anderen Worten ist es denkbar, einen Zwischenzeitraum zwischen einem Erkennungszeitpunkt des Bestandsanfangs bzw. Bestandsendes und einem Startzeitpunkt für die Veränderung des Betriebsparameters zu planen. Der so gebildete Zwischenzeitraum kann beispielsweise 1 Sekunde, vorzugsweise mehrere Sekunden, betragen.

Auch kann berücksichtigt werden, dass eine Pflanzendichte womöglich in einem Randbereich des Bestandes ausgehend von einem Maximum, das in einem Mittelbereich des Bestandes vorliegt, hin zu dem Bestandsende abnimmt. Folglich kann es sinnvoll sein, mindestens einen Betriebsparameter kontinuierlich mit zunehmender Annäherung an das Bestandsende (beim Ausfahren aus dem Bestand) bzw. umgekehrt mit zunehmender Entfernung von dem Bestandsanfang (beim Einfahren in den Bestand) jeweils von einem Startwert hin zu einem Zielwert zu verändern.

Im Vergleich zum Stand der Technik ist es für den Erfolg der Erfindung bedeutend, dass die Anpassung des mindestens einen Betriebsparameters des Mähdreschers zeitlich übereinstimmend mit einer tatsächlichen Veränderung des Erntegutdurchsatzes stattfinden kann. Eine im Stand der Technik bekannte Reaktion auf eine Veränderung des Erntegutdurchsatzes erfolgt aufgrund der in aller Regel stattfindenden Messung einer Schichtdicke eines Erntegutstroms zwangsläufig mit einem zeitlichen Versatz zwischen Änderung des Erntegutdurchsatzes und daraufhin erfolgender Veränderung eines Betriebsparameters. Dies führt im Vergleich zur vorliegenden Erfindung zu größeren Fruchtverlusten sowie den übrigen verbundenen Nachteilen.

In einer vorteilhaften Ausgestaltung des erfindungsgemäßen Verfahrens wird bei Erkennen eines Bestandsanfangs auf eine Zunahme eines mittels des Mähdreschers zu bearbeitenden Erntegutdurchsatzes und bei Erkennen eines Bestandsendes auf eine Abnahme des Erntegutdurchsatzes geschlossen, die demnächst auftreten werden. Vorzugsweise wird in Abhängigkeit von dieser Schlussfolgerung mindestens eine Parametereinstellung mindestens eines Arbeitsorgans des Mähdreschers geändert. Die Veränderung der Parametereinstellung, beispielsweise einer Drehzahl der Dreschtrommel, kann folglich in Richtung einer besseren Effizienz der Bearbeitung des Erntegutstroms unter Berücksichtigung eines fallenden oder steigenden Erntegutdurchsatzes erfolgen. Mit anderen Worten können Parametereinstellungen der Arbeitsorgane des Mähdreschers gezielt erfolgen, sodass Fruchtverluste minimiert werden.

Erfindungsgemäß umfasst das Verfahren die folgenden Verfahrensschritte:
a) Die Pflanzen des Bestands werden geschnitten und einem Dreschorgan zugeführt.
b) Mittels einer Dreschtrommel des Dreschorgans werden von den geschnittenen Pflanzen Früchte abgelöst, wobei zumindest ein Teil der Früchte durch einen Dreschkorb des Dreschorgans hindurch von verbleibenden Pflanzenresten abgeschieden wird.
c) Die Pflanzenreste werden gemeinsam mit restlichen, nicht durch den Dreschkorb abgeschiedenen Früchten an ein Trennorgan übergeben, mittels dessen weitere Früchte von den Pflanzenresten abgeschieden werden.

Die beschriebenen Verfahrensschritte sind typisch für die Bearbeitung eines Bestandes mittels eines Mähdreschers. Das Schneiden der Pflanzen erfolgt in aller Regel mittels eines Mähbalkens, der an einem Schneidwerk angeordnet ist. Das Trennorgan kann insbesondere einen Hordenschüttler oder einen Abscheiderotor sowie eine Siebeinrichtung mit einer Mehrzahl von Sieben umfassen. Die Ernte von Pflanzen ist mittels der beschriebenen Verfahrensschritte besonders effizient möglich.

Bei Zugrundelegen dieser Verfahrensweise treten die Früchte im Zuge des Abscheidens mittels des Trennorgans durch Offnungen einer Siebeinrichtung des Trennorgans hindurch. Im Zuge des Erkennens des Bestandsendes wird der Betriebsparameter "Öffnungsquerschnitte der Sieböffnungen" geändert. Insbesondere ist es vorteilhaft, wenn die Öffnungsquerschnitte verkleinert werden. Dies ist darauf zurückzuführen, dass der Erntegutdurchsatz nach Verlassen des Bestandes am Bestandsende abnimmt, woraufhin gleichermaßen eine Schichtdicke der geschnittenen Pflanzen abnimmt. Dies hat wiederum zur Folge, dass in unbeabsichtigter Weise Nichtfruchtbestandteile durch die Siebeinrichtung hindurch fallen und infolgedessen gemeinsam mit den Früchten in einen Korntank gefördert werden. Dieser Effekt kann mittels einer Verkleinerung der Öffnungsquerschnitte der Sieböffnungen vermieden werden, sodass die Verunreinigung der abgetrennten Früchte verringert wird.

Die Veränderung des Betriebsparameters "Öffnungsquerschnitte der Sieböffnungen" kann insbesondere sukzessive erfolgen, wobei vorzugsweise eine sukzessive Verkleinerung der Öffnungsquerschnitte im Zuge des Ausfahrens aus dem Bestand an dem Bestandsende vorgenommen wird.

In einer weiterhin vorteilhaften Ausgestaltung des erfindungsgemäßen Verfahrens wird der Betriebsparameter "Öffnungsquerschnitte der Sieböffnungen" infolge des Erkennens des Bestandsanfangs geändert, wobei die Öffnungsquerschnitte vorzugsweise vergrößert werden. Diese Vorgehensweise bietet den Vorteil, dass die Öffnungsquerschnitte umgekehrt analog zu der vorstehenden Beschreibung mit einem steigenden Erntegutdurchsatz vergrößert werden, um eine optimale Trennleistung des Trennorgans zu erzielen. Hierbei ist es besonders vorteilhaft, wenn die Öffnungsquerschnitte ausgehend von einem Minimum, das beim Einfahren in den Bestand an dem Bestandsanfang vorliegt, hin zu einem Maximum verändert wird, dass bei Erreichen eines maximalen Erntegutdurchsatzes vorliegt.

Typischerweise wirkt das Trennorgan mit mindestens einem Gebläse zusammen, das unterhalb mindestens eines Siebes des Trennorgans angeordnet ist. Mittels des Gebläses wird ein Luftvolumenstrom erzeugt, der entgegen einer Fallrichtung der Früchte durch die Sieböffnungen das Sieb gewissermaßen von seiner Unterseite in Richtung seiner Oberseite durchströmt. Da die Pflanzenreste neben größeren Bestandteilen, die nicht durch die Sieböffnungen hindurchtreten können, auch kleinere Bestandteile umfasst, wird mittels eines solchen Gebläses eine Windsichtung vorgenommen, mittels der die relativ schweren Früchte, insbesondere Körner, von den relativ leichten kleinen Anteilen der Pflanzenreste, beispielsweise Spreu, getrennt werden. Bei abnehmender Schichtdicke des Ernteguts, das auf einer Oberseite des Siebes geführt ist, kann der mittels des Gebläses erzeugte Luftvolumenstrom in unbeabsichtigter Weise Früchte mitreißen und austragen, die sich sodann als Fruchtverluste niederschlagen. Bei Vorliegen eines solchen Gebläses ist es daher besonders vorteilhaft, wenn der Betriebsparameter "Drehzahl des Gebläses" infolge des Erkennens des Bestandsendes geändert wird. Vorzugsweise wird die Drehzahl des Gebläses reduziert. Mittels der Reduktion der Drehzahl des Gebläses wird der Luftvolumenstrom reduziert, wodurch das in Gegenwart einer reduzierten Schichtdicke ansonsten zu beklagende, unbeabsichtigte Austragen von Früchten abnimmt.

In einer besonders vorteilhaften Ausgestaltung des erfindungsgemäßen Verfahrens werden im Zuge des Erkennens des Bestandsendes mindestens zwei Betriebsparameter betreffend das Trennorgan geändert, nämlich zum einen der Betriebsparameter "Öffnungsquerschnitte der Sieböffnungen" und zum anderen der Betriebsparameter "Drehzahl des Gebläses". Vorteilhafterweise werden diese beiden Betriebsparameter in Abstimmung zueinander verändert, um eine möglichst optimale Entmischung von Früchten und leichten Pflanzenresten zu erreichen.

Umgekehrt analog zu der Verringerung der Drehzahl des Gebläses bei Erkennen des Bestandsendes kann es gleichermaßen vorteilhaft sein, infolge des Erkennens des Bestandsanfangs den Betriebsparameter "Drehzahl des Gebläses" zu verändern, vorzugsweise dahingehend, dass die Drehzahl des Gebläses gesteigert wird. Die Austragsleistung des Gebläses wird hierdurch gesteigert, was in Anbetracht eines im Zuge des Einfahrens des Mähdreschers in den Bestand zu erwartenden Anstiegs der Schichtdicke des Ernteguts vorteilhaft ist, um die gewünschte Sichtungswirkung zu erzielen.

Unabhängig von einer Veränderung von Betriebsparametern, die das Trennorgan des Mähdreschers betreffen, kann es gleichermaßen vorteilhaft sein, infolge des Erkennens des Bestandsendes oder des Bestandsanfangs Betriebsparameter zu verändern, die das Dreschorgan treffen. Somit ist es in besonders vorteilhafter Weise denkbar, infolge des Erkennens des Bestandsendes den Betriebsparameter "Abstand zwischen Dreschkorb und Dreschtrommel" zu verändern. Vorteilhafterweise wird der Abstand verringert. Dies ist darauf zurückzuführen, dass im Zuge des Ausfahrens des Mähdreschers aus dem Bestand an dem Bestandsende der Erntegutdurchsatz abnimmt, sodass eine von den geschnittenen Pflanzen gebildete Erntegutschicht, die dem Dreschorgan zugeführt wird, ebenfalls abnimmt. Der Abstand zwischen der Dreschtrommel und dem zugehörigen Dreschkorb ist derart eingestellt, dass eine möglichst vollständige Abtrennung der Früchte von den Pflanzenresten stattfinden kann. Hierbei ist sowohl die Schlagwirkung der Dreschtrommel als auch die Reibung der Pflanzen untereinander von Bedeutung, um eine gewünschte Druschintensität zu erhalten. Mit abnehmender Schichtdicke der Erntegutschicht, die im Zuge des Ausfahrens aus dem Bestand an dem Bestandsende zu erwarten ist, ist der Spalt zwischen Dreschtrommel und Dreschkorb gewissermaßen "zu leer", um die gewünschte Druschintensität (und mithin das gewünschte Druschergebnis) zu erhalten. Folglich sinkt die Leistung des Dreschorgans mit der Folge, dass die Früchte nicht mehr vollständig von den Pflanzenresten abgetrennt werden. Entsprechend ist es von Vorteil, den Spalt zwischen dem Dreschkorb und der Dreschtrommel bei abnehmendem Erntegutdurchsatz zu verringern, was in bevorzugter Weise infolge des Erkennens des Bestandsendes entsprechend vorgenommen wird.

Umgekehrt analog zu einer Verringerung des Abstandes zwischen dem Dreschkorb und der Dreschtrommel kann es gleichermaßen vorteilhaft sein, infolge des Erkennens des Bestandsanfangs den Betriebsparameter "Abstand zwischen Dreschkorb und Dreschtrommel" zu vergrößern. Andernfalls wäre das Dreschorgan bei steigendem Erntegutdurchsatz nicht in der Lage, das Erntegut zu bearbeiten.

Grundsätzlich unabhängig von dem Betriebsparameter "Abstand zwischen Dreschkorb und Dreschtrommel", jedoch vorteilhafterweise in Kombination mit selbigen, kann es weiterhin besonders vorteilhaft sein, bei Erkennen von Bestandsende bzw. Bestandsanfang den Betriebsparameter "Drehzahl der Dreschtrommel" zu verändern. Insbesondere ist es vorteilhaft, die Drehzahl der Dreschtrommel bei Erkennen des Bestandsendes zu verringern. Hierdurch wird erreicht, dass in Gegenwart des geringeren Erntegutdurchsatzes und der daraufhin reduzierten Schichtdicke, die im Zug des Ausfahrens aus dem Bestand an dem Bestandsende zu erwarten sind, die Schlagwirkung der Dreschtrommel und damit insbesondere ein Bruchkornanteil der geerntete Früchte nicht ansteigt, sondern auf einem akzeptablen Niveau gehalten wird. Bei Erkennen des Bestandsanfangs wird die Drehzahl der Dreschtrommel entsprechend vorzugsweise erhöht.

Die Erfassung des Vorbereichs des Mähdreschers kann in besonders vorteilhafter Weise berührungslos, insbesondere optisch, erfolgen. Hierzu ist beispielsweise der Einsatz einer Kamera und/oder eines Lasers denkbar.

In vorrichtungstechnischer Hinsicht wird die zugrunde liegende Aufgabe mittels eines selbstfahrenden Mähdreschers mit den Merkmalen des Anspruchs 14 gelöst. Vorteilhafte Ausgestaltungen ergeben sich aus den Unteransprüchen 15 bis 18.

Der erfindungsgemäße Mähdrescher ist dadurch gekennzeichnet, dass er dazu eingerichtet ist, das erfindungsgemäße Verfahren nach Anspruch 1 auszuführen. Dabei weist der Mähdrescher mindestens eine Sensoreinrichtung zur Erfassung eines Vorbereichs des Mähdreschers auf. Ferner umfasst der Mähdrescher mindestens eine Recheneinheit, mittels der Daten verarbeitbar sind, die mittels der Sensoreinrichtung erfasst wurden. Schließlich umfasst der erfindungsgemäße Mähdrescher mindestens einen Aktor, mittels dessen mindestens ein Betriebsparameter des Mähdreschers veränderbar ist. Dieser Aktor ist mittels der Recheneinheit ansteuerbar, sodass die Recheneinheit infolge einer Verarbeitung der mittels der Sensoreinrichtung erfassten Daten auf eine Veränderung des mindestens einen Betriebsparameters hinwirken kann.

Das erfindungsgemäße Verfahren ist mittels des erfindungsgemäßen Mähdreschers besonders einfach ausführbar. Insbesondere kann mittels der Sensoreinrichtung der Vorbereich des Mähdreschers erfasst werden, wobei insbesondere eine berührungslose, vorzugsweise optische, Erfassung vorteilhaft ist. Bei einer solchen Ausgestaltung umfasst die Sensoreinrichtung beispielsweise eine Kamera oder einen Laser. Die mittels der Sensoreinrichtung erfassten Daten werden mittels der Recheneinheit verarbeitet und ausgewertet, wodurch die Möglichkeit geschaffen wird, einen Bestandsanfang oder ein Bestandsende zu erkennen. Vorteilhafterweise ist die Sensoreinrichtung im Zusammenspiel mit der Recheneinheit geeignet, einen Abstand zu dem Bestandsanfang bzw. zu dem Bestandsende zu ermitteln. Mittels der Recheneinheit kann sodann ein Steuerbefehl erzeugt werden, der an den Aktor geleitet und mittels des letzteren in die Veränderung eines jeweiligen Betriebsparameters des Mähdreschers umgesetzt wird.

Erfindungsgemäß umfasst der Mähdrescher mindestens einen Aktor, der mit dem Trennorgan zusammenwirkt. Dieses Zusammenwirken erfolgt in der Art, dass infolge der Betätigung des Aktors Öffnungsquerschnitte der Sieböffnungen veränderbar sind. Auf diese Weise ist es möglich, infolge des Erkennens eines Bestandsanfangs oder Bestandsendes die Öffnungsquerschnitte der Sieböffnungen zu verändern. Die Vorteile dieses Vorgehens sind vorstehend bereits dargelegt.

Weiterhin ist ein solcher Mähdrescher vorteilhaft, der mindestens ein Gebläse umfasst, das dem Trennorgan zugeordnet ist. Mittels des Gebläses wird die Möglichkeit geschaffen, nach dem Prinzip der Windsichtung leichte Pflanzenreste von Früchten zu trennen, wobei die Pflanzenreste aus dem Mähdrescher ausgetragen werden sollen, während die Früchte gesammelt und typischerweise einem Korntank zugeführt werden. In der vorteilhaften Ausgestaltung wirkt mindestens ein Aktor mit dem Gebläse zusammen, sodass infolge einer Betätigung des Aktors eine Drehzahl des Gebläses veränderbar ist. Auf diese Weise kann die Drehzahl des Gebläses infolge des Erkennens eines Bestandsanfangs oder Bestandsendes verändert werden.

Weiterhin ist ein solcher Mähdrescher besonders vorteilhaft, der mindestens einen mit dem Dreschorgan zusammenwirkenden Aktor umfasst. Dieser Aktor ist derart ausgebildet, dass infolge seiner Betätigung ein Abstand zwischen der Dreschtrommel und dem Dreschkorb veränderbar ist. Ferner kann ein solcher Aktor vorteilhaft sein, mittels dessen eine Veränderung der Drehzahl der Dreschtrommel möglich ist. Idealerweise umfasst der Mähdrescher mehrere mit dem Dreschorgan zusammenwirkende Aktoren, sodass verschiedene Betriebsparameter des Mähdreschers im Hinblick auf das Dreschorgan veränderbar sind. Die Vorteile solcher Veränderungen sind vorstehend bereits dargelegt.

Die Erfindung ist nachstehend anhand eines Ausführungsbeispiels, das in den Figuren dargestellt ist, näher erläutert. Es zeigt:
- Fig. 1:: Einen Querschnitt durch einen erfindungsgemäßen Mähdrescher,
- Fig. 2:: Eine schematische Draufsicht auf ein Feld, auf dem ein Bestand zu erntender Pflanzen steht,
- Fig. 3:: Ein schematischer Querschnitt durch ein mit einem Gebläse zusammenwirkendes Trennorgan,
- Fig. 4:: Der Querschnitt gemäß Figur 3, wobei eine Schichtdicke des bearbeiteten Ernteguts verringert ist,
- Fig. 5:: Der Querschnitt gemäß Figur 4, wobei Öffnungsquerschnitte von Sieböffnungen des Trennorgans verkleinert sind,
- Fig. 6:: Einen schematischen Querschnitt durch ein Dreschorgan,
- Fig. 7:: Den schematischen Querschnitt gemäß Figur 6, wobei eine Schichtdicke des bearbeiteten Ernteguts verringert ist und
- Fig. 8:: Den schematischen Querschnitt gemäß Figur 7, wobei ein Abstand zwischen einer Dreschtrommel und einem Dreschkorb des Dreschorgans verringert ist.

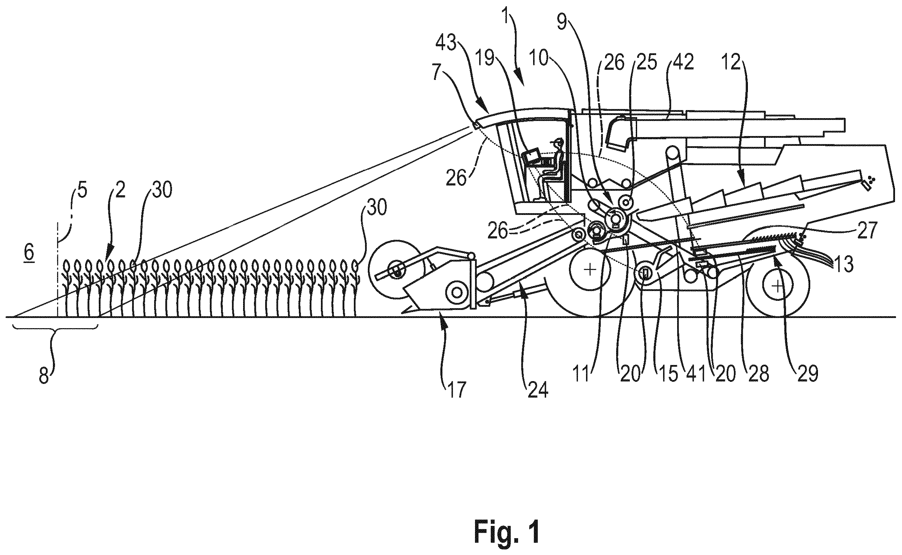

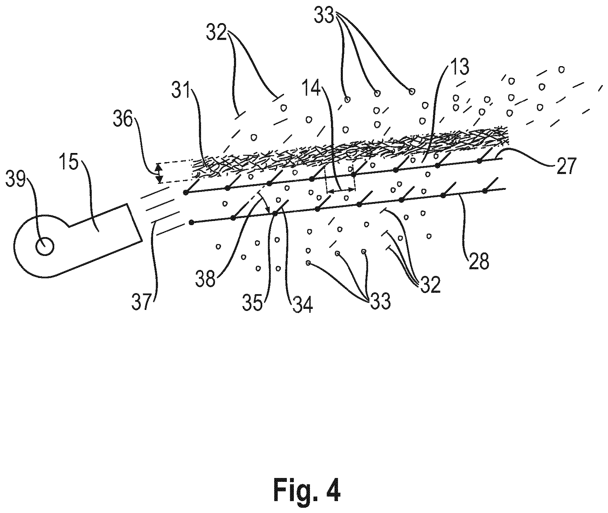

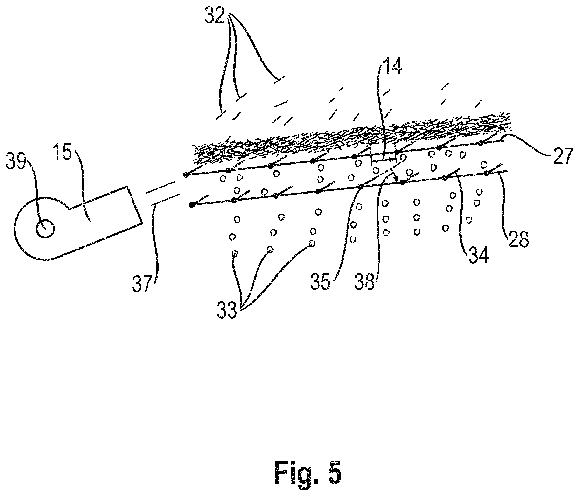

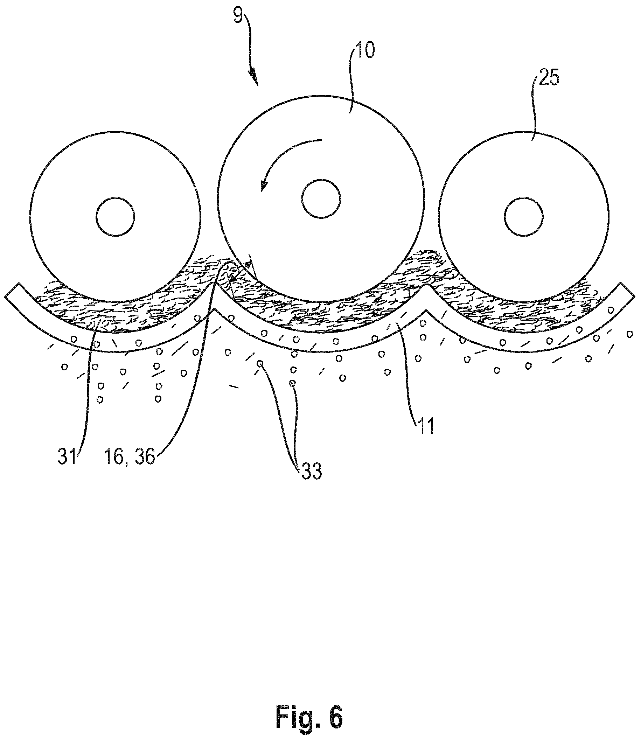

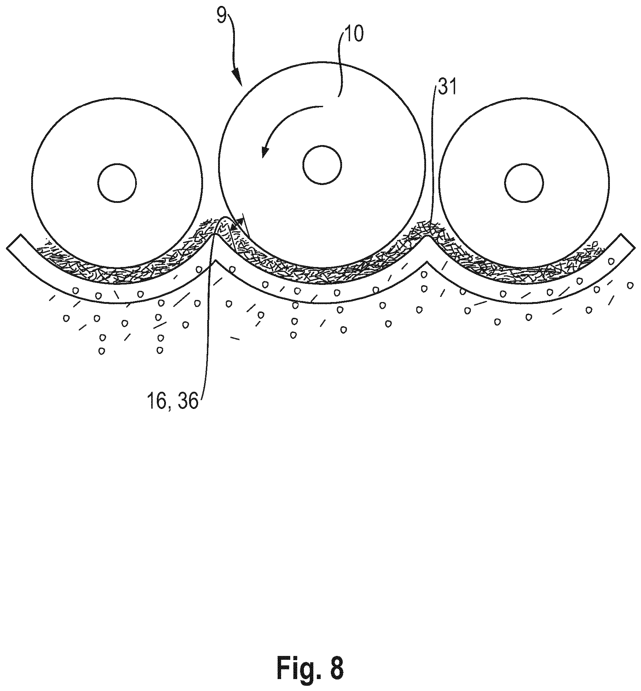

Ein Ausführungsbeispiel, das in den **Figuren 1 bis 8** gezeigt ist, umfasst einen erfindungsgemäßen Mähdrescher **1,** der zu Durchführung des erfindungsgemäßen Verfahrens geeignet ist. Der Mähdrescher **1** umfasst an seinem vorderen Ende ein Schneidorgan **17,** mittels dessen Pflanzen **30** eines Bestandes **2** von Pflanzen schneidbar sind. Die geschnittenen Pflanzen **30** sind sodann mittels eines Schrägförderers **24** in Richtung eines Dreschorgans **9** förderbar. Mittels des Dreschorgans **9,** das eine Dreschtrommel **10** sowie einen Dreschkorb **11** umfasst, sind die geschnittenen Pflanzen **30** bearbeitbar, sodass Früchte von Pflanzenresten ablösbar sind. Hierzu wird die Dreschtrommel **10** um eine zugehörige Drehachse rotatorisch betrieben, wodurch in Zusammenwirkung mit dem Dreschkorb **11,** der in einem Abstand **16** zu einer Umfangsfläche der Dreschtrommel **10** angeordnet ist, die Früchte von den Pflanzenresten abgelöst werden. Hierbei begrenzen die Dreschtrommel **10** und der Dreschkorb **11** gemeinsam einen Führungsspalt **18,** durch den eine von den Pflanzen **30** gebildete Erntegutschicht **31** führbar ist. Bereits ein Großteil der abgelösten Früchte wird unmittelbar durch Ausnehmungen des Dreschkorbs **11** nach unten auf eine Fördereinrichtungen **41** abgeschieden und mittels der Fördereinrichtungen **41** einer Siebeinrichtung **29** zugeführt. Abgelöste Früchte, die nicht bereits durch den Dreschkorb **11** abgeschieden werden, werden gemeinsam mit den verbleibenden Pflanzenresten mittels einer Wendetrommel **25** an einen dem Dreschorgan **9** nachgeschaltetes Trennorgan **12** übergeben.

Letzteres ist in dem gezeigten Beispiel von einem Hordenschüttler gebildet. In einer ersten groben Siebstufe des Trennorgans **12** werden grobe Pflanzenreste von den Früchten sowie kleinen Pflanzenresten getrennt, woraufhin das Gemisch aus kleinen Pflanzenresten sowie den Früchten der Siebeinrichtung **29** zugeleitet wird. Diese umfasst in dem gezeigten Beispiel ein Obersieb **27** sowie ein Untersieb **28,** die jeweils eine Vielzahl von Sieböffnungen **13** aufweisen. Die Sieböffnungen **13** des Obersiebs **27** weisen jeweils größere Öffnungsquerschnitte **14** auf als das demgegenüber feinere Untersieb **28.** Die Siebeinrichtung **29** wirkt in dem gezeigten Beispiel mit einem Gebläse **15** zusammen, mittels dessen eine gerichtete Luftströmung **37** erzeugbar ist. Diese ist derart ausgerichtet, dass sie die Siebeinrichtung **29** in eine schräg aufwärtsgerichtete Richtung durchströmt. Die Aufgabe des Gebläses **15** besteht darin, nach dem Prinzip der Windsichtung die kleinen Pflanzenreste, insbesondere Spreu **32,** von den Früchten zu trennen, die insbesondere von Körnern **33** gebildet sein können. Auf diese Weise soll erreicht werden, dass ein Gutstrom, der letztlich einem Korntank **42** des Mähdreschers **1** zugeführt wird, zu einem möglichst großen Anteil aus Früchten besteht und folglich möglichst frei von Pflanzenresten ist. Gleichzeitig ist es von Bedeutung, Pflanzenreste nicht "zu aggressiv" auszutragen, damit nicht in unbeabsichtigter Weise Früchte gemeinsam mit abzuscheiden Pflanzenresten aus dem Mähdrescher **1** ausgetragen werden und infolgedessen als Fruchtverluste hingenommen werden müssen.

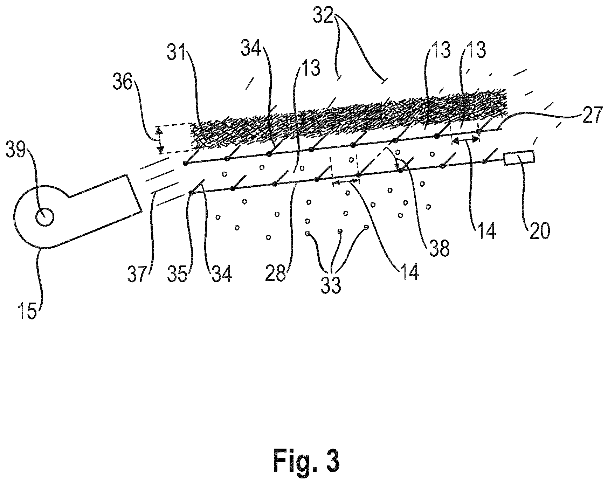

Das Obersieb **27** und das Untersieb **28** wirken jeweils mit einem Aktor **20** zusammen, mittels dessen Lamellen **34** verstellbar sind. Hierzu wirkt der Aktor **20,** der beispielsweise von einem Linearmotor gebildet sein kann, mit einem Schiebegestänge zusammen, das mit sämtlichen Lamellen **34** des jeweiligen Siebs verbunden ist. Mittels Betätigung des Aktors **20** sind die Lamellen **34** auf diese Weise gemeinsam jeweils um ein zugehöriges Gelenk **35** verschwenkbar, sodass sich ein Lamellenwinkel **38** der Lamellen **34** bezogen auf eine Siebebene des jeweiligen Siebs verändert. Dies hat zum Ergebnis, dass die Öffnungsquerschnitte **14** der Sieböffnungen **13** veränderbar sind. Dies ergibt sich nachstehend besonders gut anhand der **Figuren 3 bis 5****.**

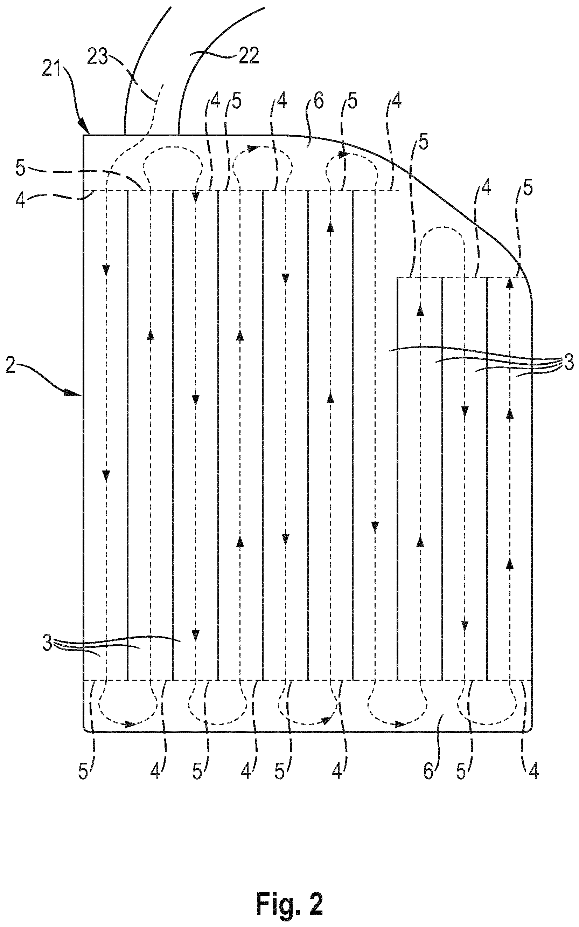

Der erfindungsgemäße Mähdrescher verfügt in dem gezeigten Beispiel an einem vorderen oberen Ende einer Fahrerkabine **43** über eine Sensoreinrichtung **7,** die hier von einer Kamera gebildet ist. Mittels der Sensoreinrichtung **7** ist die Möglichkeit gegeben, einen Vorbereich **8** des Mähdreschers **1** optisch zu erfassen. Der Vorbereich **8** ist in Fahrtrichtung des Mähdreschers **1** betrachtet vor dem Schneidorgan **17** angeordnet, wobei ein Abstand des Vorbereichs **8** von dem Schneidorgan **17** in dem gezeigten Beispiel ca. 10 m beträgt. Die Sensoreinrichtung **7** ist hier mittels einer Datenverbindung **26** mit einer Recheneinheit **19** verbunden, die in der Fahrerkabine **43** angeordnet ist. Mittels der Recheneinheit **19** ist es möglich, Daten zu verarbeiten, die mittels der Sensoreinrichtung **7** erfasst worden sind. Auf diese Weise ist es möglich, einen Bestandsanfang **4** oder ein Bestandsende **5** eines Bestandes **2** zu erntender Pflanzen **30** zu erfassen. Anhand der Darstellung gemäß **Figur 1** ist veranschaulicht, dass mittels der Sensoreinrichtung **7** ein Bestandsende **5** eines von Pflanzen **30** gebildeten Bestandes **2** erfasst wird, der auf einem Feld **21** steht. Das Bestandsende **5** bildet dabei gewissermaßen einen Übergang zwischen einem Bereich des Feldes **21,** in dem Pflanzen **30** stehen und einem Bereich des Feldes **21,** in dem keine Pflanzen **30** stehen. In der Praxis ist es üblich, zu Beginn der Bearbeitung eines Feldes **21** zunächst einen Randbereich des Feldes **21** vollständig abzuernten, um diesen Randbereich sodann bei Bearbeitung des verbleibenden Bestandes **2** als sogenanntes Vorgewende **6** verwenden zu können. In diesem Vorgewende **6** hat der Mähdrescher **1** die Möglichkeit, nach Bearbeitung eines Abschnitts **3** des Bestandes **2** zu wenden und sodann den nächsten Abschnitts **3** zu bearbeiten. Ein solcher Ablauf ist besonders gut anhand von **Figur 2** erkennbar.

Hierbei fährt der Mähdrescher **1** zunächst über eine Zuwegung **22** auf das Feld **21.** Eine Fahrspur **23** des Mähdreschers **1** ist in **Figur 2** mittels einer gestrichelten Linie veranschaulicht. In dem gezeigten Beispiel ist ein Bereich des Vorgewendes **6** nicht mit zu erntenden Pflanzen **30** bepflanzt worden, sodass eine Bearbeitung eines Randbereichs des Feldes **21** zwecks Schaffung des Vorgewendes **6** hier entfallen kann. Folglich kann die Bearbeitung des Bestandes **2** unmittelbar erfolgen, wobei der Mähdrescher eine Vielzahl parallel zueinander verlaufender Abschnitte **3,** die hier jeweils von in sich geraden Arbeitsspuren gebildet sind, nacheinander überstreicht. Zu Beginn eines jeden der Abschnitte 3 fährt der Mähdrescher **1** hierzu an einem Bestandsanfang **4** in den Bestand **2** ein und an dem Ende des Abschnitts **3** an einem zugeordneten Bestandsende 5 wieder aus dem Bestand **2** heraus. Daraufhin wendet der Mähdrescher **1** in dem Vorgewende **6** und bearbeitet in der gleichen Weise den jeweils nächsten Abschnitt **3.**

Am Beispiel der Erkennung des Bestandsendes **5** gemäß **Figur 1** erläutert, werden erfindungsgemäß die mittels der Sensoreinrichtung **7** erfassten Daten an die Recheneinheit **19** geleitet und dort ausgewertet. Eine Interpretation der mittels der Sensoreinrichtung **7** erfassten Bilddaten, die mittels der Recheneinheit **19** erfolgt, hat zum Ergebnis, dass das Bestandsende **5** erkannt wird. Infolgedessen ist nunmehr bekannt, dass der Mähdrescher **1** demnächst das Bestandsende **5** erreichen wird. Beim Verlassen des Bestands **2** wird der Erntegutdurchsatz abnehmen, da das Bestandsende **5** die Grenze zwischen dem Bestand **2** und dem Vorgewende **6** darstellt, wobei infolge des Ausfahrens aus dem Bestand **2** keine weiteren Pflanzen **30** geschnitten und dem Dreschorgan **9** zugeführt werden. Hinzu kann sich der Effekt addieren, dass eine Dichte der Pflanzen **30** in einem Randbereich des Bestandes **2** typischerweise niedriger ist als in einem Mittelbereich des Bestandes **2.** Folglich kann es vorkommen, dass ein Massenstrom geernteter Pflanzen **30,** der mittels des Mähdreschers **1** zu verarbeiten ist, bereits bei Annäherung an das Bestandsende **5** abnimmt, bis er schließlich nach Erreichen des Bestandsendes **5** und dem damit verbundenen Ausfahren aus dem Bestand **2** bis auf Null absinkt. Nach dem Erkennen des Bestandsendes **5** können diese Effekte steuerungstechnisch berücksichtigt werden, indem erfindungsgemäß mindestens ein Betriebsparameter - nämlich wenigstens der Betriebsparameter Öffnungsquerschnitte der Sieböffnungen-des Mähdreschers **1** verändert wird. In dem gezeigten Beispiel wird eine Mehrzahl von Betriebsparametern verändert, um den sich ändernden Erntegutdurchsatz im Zuge des Ausfahrens aus dem Bestand **2** an den Bestandsende **5** zu berücksichtigen.

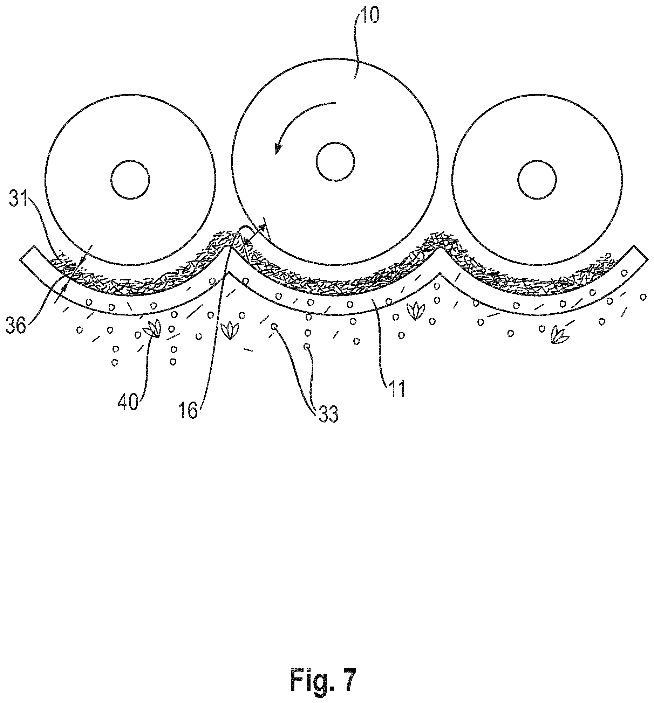

Hierzu ist die Recheneinheit **19** mittels einer Mehrzahl von Datenverbindungen **26** mit verschiedenen Aktoren **20** verbunden, die mit verschiedenen Arbeitsorganen des Mähdreschers **1** zusammenwirken. In dem gezeigten Beispiel werden insgesamt vier Betriebsparameter des Mähdreschers **1** infolge des Erkennens des Bestandsendes **5** oder analog eines Bestandsanfangs **4** zumindest zeitweise verändert. Hierbei handelt es sich um die Betriebsparameter "Abstand **16** des Dreschkorb **11** von der Dreschtrommel **10",** "Drehzahl der Dreschtrommel **10",** "Drehzahl des Gebläses **15"** und "Öffnungsquerschnitte **14** der Sieböffnungen **13".** Wie vorstehend bereits im Detail dargelegt ist, ist es im Interesse eines möglichst geringen Fruchtverlusts begrüßenswert, im Zuge einer Abnahme des Erntegutdurchsatzes den Abstand **16** des Dreschkorb **11** von der Dreschtrommel **10** zu reduzieren, um trotz sinkender Schichtdicke **36** einer von den geschnittenen Pflanzen gebildeten Erntegutschicht **31** eine ausreichende Druschintensität zu erzielen, die eine möglichst vollständige Ablösung der Früchte von den Pflanzen gewährleistet. Bei Vorliegen einer zu niedrigen Druschintensität kann es insbesondere vorkommen, dass ganze Ährenteile **40** durch den Dreschkorb **11** hindurch abgeschieden werden, wobei die in den Ährenteilen **40** gehaltenen Früchte nicht abgelöst wurden. Dieses beispielhaft anhand von **Figur 7** dargestellt. Die Reduktion des Abstandes **16** zwischen Dreschtrommel **10** und Dreschkorb **11** der Dreschtrommel **10** hilft, dem entgegenzuwirken. Zudem ist es vorteilhaft, die Drehzahl der Dreschtrommel **10** zu verringern, um in Gegenwart der abnehmenden Schichtdicke **36** der Erntegutschicht **31** das Niveau des Bruchkornanteils der Früchte zu stabilisieren.

In Bezug auf die Siebeinrichtung **29** ist es vorteilhaft, im Zuge des Ausfahrens aus dem Bestand **2** die Öffnungsquerschnitte **14** der Öffnungen **13** zu verkleinern und zudem die Drehzahl des Gebläses **15** zu reduzieren. Zur Erzielung des letztgenannten Effekts wird die Leistung eines Gebläsemotors **39** des Gebläses **15** reduziert. Auf diese Weise wird vermieden, dass ein infolge einer geringeren Schichtdicke **36** der Erntegutschicht **31** erhöhter Austrag von Körnern **33** aus dem Mähdrescher 1 stattfindet, während ein unerwünscht hoher Anteil von kleinen Bestandteilen der Pflanzenreste, insbesondere in Form von Spreu **32,** nicht ausgetragen, sondern gemeinsam mit den Früchten gesammelt wird.

Die Veränderung der Betriebsparameter des Mähdreschers **1** kann in besonders vorteilhafter Weise geplant vorgenommen werden, wobei dies ohne die Erfassung der Schichtdicke **36** der Erntegutschicht **31** vorgenommen wird. Dies hat den besonderen Vorteil, dass nicht erst die Veränderung der Schichtdicke **36** abgewartet werden muss, bis die Betriebsparameter des Mähdreschers **1** tatsächlich angepasst werden können. Stattdessen wird in dem gezeigten Beispiel die Veränderung der Betriebsparameter geplant: Bei Erkennen des Bestandsendes **5** gemäß **Figur 1** kann in Kenntnis einer Fahrgeschwindigkeit des Mähdreschers **1** bestimmt werden, welcher Zeitraum bis zum Erreichen des Bestandsendes **5** verstreicht. Die Veränderung mindestens eines der Betriebsparameter, vorzugsweise sämtlicher Betriebsparameter, kann daraufhin zeitlich übereinstimmend mit der faktischen Abnahme des Erntegutdurchsatzes vorgenommen werden; besagte Abnahme muss entsprechend nicht zunächst abgewartet werden, bevor Reaktionen möglich sind. Hinzu kommt der Vorteil, dass Veränderungen der Betriebsparameter bereits im Vorfeld des Erreichens des Bestandsendes **5** vorgenommen werden können, womit insbesondere auf den vorstehend erläuterten, sich kontinuierlich verringernden Erntegutdurchsatz im Zuge der Annäherung an das Bestandsende **5** Rücksicht genommen werden kann. Im Ergebnis können die Arbeitsorgane des Mähdreschers **1** derart gezielt gesteuert werden, dass die Fruchtverluste auf ein Minimum reduziert werden.

### Bezugszeichenliste

- 1: Mähdrescher
- 2: Bestand
- 3: Abschnitt
- 4: Bestandsanfang
- 5: Bestandsende
- 6: Vorgewende
- 7: Sensoreinrichtung
- 8: Vorbereich
- 9: Dreschorgan
- 10: Dreschtrommel
- 11: Dreschkorb
- 12: Trennorgan
- 13: Sieböffnung
- 14: Öffnungsquerschnitt
- 15: Gebläse
- 16: Abstand
- 17: Schneidorgan
- 18: Führungsspalt
- 19: Recheneinheit
- 20: Aktor
- 21: Feld
- 22: Zuwegung
- 23: Fahrspur
- 24: Schrägförderer
- 25: Wendetrommel
- 26: Datenverbindung
- 27: Obersieb
- 28: Untersieb
- 29: Siebeinrichtung
- 30: Pflanze
- 31: Erntegutschicht
- 32: Spreu
- 33: Korn
- 34: Lamelle
- 35: Gelenk
- 36: Schichtdicke
- 37: Luftströmung
- 38: Lamellenwinkel
- 39: Gebläsemotor
- 40: Ährenteile
- 41: Fördereinrichtung
- 42: Korntank
- 43: Fahrerkabine

## Patentansprüche

1. Verfahren zur Ernte eines auf einem Feld angeordneten Bestands (2) zu erntender Pflanzen mittels eines Mähdreschers (1),
wobei der Bestand (1) in einzelnen Abschnitten (3) bearbeitet wird,
wobei der Mähdrescher (1) bei Beginn der Bearbeitung eines Abschnitts (3) an einem Bestandsanfang (4) in den Bestand (2) einfährt und/oder bei Beendigung der Bearbeitung eines Abschnitts (3) an einem Bestandsende (5) aus dem Bestand (2) ausfährt,
wobei der Mähdrescher (1) nach Beendigung der Bearbeitung eines jeweiligen Abschnitts (3) in einem Vorgewende (6) des Feldes wendet und anschließend mit der Bearbeitung eines weiteren Abschnitts (3) beginnt,
wobei mittels mindestens einer Sensoreinrichtung (7) ein Vorbereich (8) des Mähdreschers (1) erfasst wird, sodass ein Bestandsanfang (4) und/oder ein Bestandsende (5) erkennbar sind,
wobei infolge des Erkennens eines Bestandsanfangs (4) und/oder eines Bestandsendes (5) mindestens ein Betriebsparameter des Mähdreschers (1) zumindest zeitweise geändert wird, wobei das Verfahren die folgenden Verfahrensschritte umfasst:
a) Die Pflanzen des Bestands (2) werden geschnitten und einem Dreschorgan (9) zugeführt.
b) Mittels einer Dreschtrommel (10) des Dreschorgans (9) werden von den geschnittenen Pflanzen Früchte abgelöst, wobei zumindest ein Teil der Früchte durch einen Dreschkorb (11) des Dreschorgans (9) hindurch von verbleibenden Pflanzenresten abgeschieden wird.
c) Die Pflanzenreste werden gemeinsam mit restlichen, nicht durch den Dreschkorb (11) abgeschiedenen Früchten an ein Trennorgan (12) übergeben, mittels dessen weitere Früchte von den Pflanzenresten abgeschieden werden,
wobei die Früchte im Zuge des Abscheidens mittels des Trennorgans (12) durch Sieböffnungen (13) einer Siebeinrichtung (29) des Trennorgans (12) hindurchtreten, wobei infolge des Erkennens des Bestandsendes (5) der Betriebsparameter "Öffnungsquerschnitte (14) der Sieböffnungen (13)" geändert wird, wobei vorzugsweise die Öffnungsquerschnitte (14) verkleinert werden.

2. Verfahren nach Anspruch 1, **dadurch gekennzeichnet, dass** bei Erkennen eines Bestandsanfangs (4) auf eine Zunahme eines mittels des Mähdreschers (1) zu bearbeitenden Erntegutdurchsatzes und/oder bei Erkennen eines Bestandsendes (5) auf eine Abnahme des Erntegutdurchsatzes geschlossen wird, wobei vorzugsweise in Abhängigkeit von der Schlussfolgerung betreffend den Erntegutdurchsatz mindestens eine Parametereinstellung mindestens eines Arbeitsorgans des Mähdreschers (1) geändert wird.

3. Verfahren nach Anspruch 1, **dadurch gekennzeichnet, dass** die Früchte im Zuge des Abscheidens mittels des Trennorgans (12) durch Sieböffnungen (13) einer Siebeinrichtung (29) des Trennorgans (12) hindurchtreten, wobei infolge des Erkennens des Bestandsanfangs (4) der Betriebsparameter "Öffnungsquerschnitte (14) der Sieböffnungen (13)" geändert wird, wobei vorzugsweise die Öffnungsquerschnitte (14) vergrößert werden.

4. Verfahren nach einem der Ansprüche 1 bis 3, **dadurch gekennzeichnet, dass** mittels mindestens eines Gebläses (15) leichte Bestandteile der Pflanzenreste nach dem Prinzip der Windsichtung von den Früchten getrennt werden, wobei infolge des Erkennens des Bestandsendes (5) der Betriebsparameter "Drehzahl des Gebläses (15)" geändert wird, vorzugsweise die Drehzahl des Gebläses (15) verringert wird.

5. Verfahren nach Anspruch 4, **dadurch gekennzeichnet, dass** infolge des Erkennens des Bestandsanfangs (4) der Betriebsparameter "Drehzahl des Gebläses (15)" geändert wird, vorzugsweise die Drehzahl des Gebläses (15) gesteigert wird.

6. Verfahren nach einem der Ansprüche 1 bis 5, **dadurch gekennzeichnet, dass** infolge des Erkennens des Bestandsendes (5) der Betriebsparameter "Abstand (16) zwischen Dreschkorb (11) und Dreschtrommel (10)" geändert wird, vorzugsweise der Abstand (16) verringert wird.

7. Verfahren nach Anspruch 6, **dadurch gekennzeichnet, dass** infolge des Erkennens des Bestandsanfangs (4) der Betriebsparameter "Abstand (16) zwischen Dreschkorb (11) und Dreschtrommel (10)" geändert wird, vorzugsweise der Abstand (16) vergrößert wird.

8. Verfahren nach einem der Ansprüche 1 bis 7, **dadurch gekennzeichnet, dass** infolge des Erkennens des Bestandsendes (5) der Betriebsparameter "Drehzahl der Dreschtrommel (10)" geändert wird, vorzugsweise die Drehzahl verringert wird.

9. Verfahren nach Anspruch 8, **dadurch gekennzeichnet, dass** infolge des Erkennens des Bestandsanfangs (4) der Betriebsparameter "Drehzahl der Dreschtrommel (10)" geändert wird, vorzugsweise die Drehzahl gesteigert wird.

10. Verfahren nach einem der Ansprüche 1 bis 9, **dadurch gekennzeichnet, dass** der Vorbereich (8) des Mähdreschers (1) mittels der Sensoreinrichtung (7) berührungslos, vorzugsweise optisch, erfasst wird.

11. Verfahren nach einem der Ansprüche 1 bis 10, **dadurch gekennzeichnet, dass** die Veränderung des mindestens einen Betriebsparameters ausgehend von einem Startwert hin zu einen Zielwert über einen Änderungszeitraum hinweg, vorzugsweise kontinuierlich, erfolgt.

12. Verfahren nach einem der Ansprüche 1 bis 11, **dadurch gekennzeichnet, dass** nach Erkennen des Bestandsanfangs (4) oder Bestandsendes (5) ein Startzeitpunkt geplant wird, zu dem die Änderung des mindestens einen Betriebsparameters vorgenommen oder zumindest begonnen werden soll.

13. Verfahren nach Anspruch 12, **dadurch gekennzeichnet, dass** zwischen einem Erkennungszeitpunkt, zu dem der Bestandsanfang (4) bzw. das Bestandsende (5) erkannt wird, und dem Startzeitpunkt der Änderung des Betriebsparameters ein Zwischenzeitraum geplant wird, der vorzugsweise mindestens 1 Sekunde, weiter vorzugsweise mindestens 5 Sekunden, beträgt.

14. Selbstfahrender Mähdrescher (1) zur Ernte eines auf einem Feld angeordneten Bestands (2) zu erntender Pflanzen, wobei der Mähdrescher zur Ausführung des Verfahrens gemäß Anspruch 1 eingerichtet ist, umfassend
- ein Schneidorgan (17) zum Schneiden der zu erntenden Pflanzen des Bestandes,
- ein Dreschorgan (9) zur Lösung von Früchten von den Pflanzen sowie
- ein Trennorgan (12) zur Trennung von Früchten von Pflanzenresten
wobei das Dreschorgan (9) eine Dreschtrommel (10) und einen Dreschkorb (11) aufweist, die in einem Abstand (16) zueinander angeordnet sind und gemeinsam einen Führungsspalt (18) zur Führung eines Erntegutstroms begrenzen,
wobei das Trennorgan (12) mindestens eine Siebeinrichtung (29) mit einer Mehrzahl von Sieböffnungen (13) aufweist, durch die hindurch Früchte abgeschieden und auf diese Weise von den Pflanzenresten getrennt werden,
mindestens eine Sensoreinrichtung (7) zur Erfassung eines Vorbereichs (8) des Mähdreschers (1), der sich in Fahrtrichtung des Mähdreschers (1) betrachtet vor dem Schneidorgan (17) befindet,
mindestens eine Recheneinheit (19), mittels der von der Sensoreinrichtung (7) erfasste Daten verarbeitet werden, sowie
mindestens einen mittels der Recheneinheit (19) ansteuerbarer Aktor (20), mittels dessen mindestens ein Betriebsparameter des Mähdreschers (1) verändert wird, wobei der mindestens eine Aktor (20) derart mit dem Trennorgan (12) zusammenwirkt, dass infolge einer Betätigung des Aktors (20) Öffnungsquerschnitte (14) der Sieböffnungen (13) verändert werden können.

15. Mähdrescher (1) nach Anspruch 14, **dadurch gekennzeichnet, dass** die Sensoreinrichtung (7) von einer Kamera gebildet ist, mittels der der Vorbereich (8) des Mähdreschers (1) optisch erfasst wird.

16. Mähdrescher (1) nach einem der Ansprüche 14 oder 15, **gekennzeichnet durch** mindestens ein Gebläse (15), mittels dessen leichte Pflanzenreste nach dem Prinzip der Windsichtung von Früchten getrennt werden, wobei mindestens ein Aktor (20) derart mit dem Gebläse (15) zusammenwirkt, dass infolge einer Betätigung des Aktors (20) eine Drehzahl des Gebläses (15) verändert wird.

17. Mähdrescher (1) nach einem der Ansprüche 14 bis 16, **dadurch gekennzeichnet, dass** mindestens ein Aktor (20) derart mit dem Dreschorgan (9) zusammenwirkt, dass infolge einer Betätigung des Aktors (20) ein Abstand (16) zwischen der Dreschtrommel (10) und dem Dreschkorb (11) verändert wird.

18. Mähdrescher (1) nach einem der Ansprüche 14 bis 17, **dadurch gekennzeichnet, dass** mindestens ein Aktor (20) derart mit dem Dreschorgan (9) zusammenwirkt, dass infolge einer Betätigung des Aktors (20) eine Drehzahl der Dreschtrommel (10) verändert wird.

## Claims

1. A method for harvesting a field crop (2) of plants disposed on a field which are to be harvested by means of a combine harvester (1),
wherein the crop (1) is processed in individual sections (3), wherein, at the beginning of processing of a section (3), the combine harvester (1) drives into the field crop (2) at a field crop start (4) and/or at the end of processing of a section (3), the combine harvester drives out of the field crop (2) at a field crop end (5),
wherein, after ending the processing of a respective section (3), the combine harvester (1) turns in a headland (6) of the field and subsequently begins with the processing of a further section (3),
wherein
a front region (8) of the combine harvester is detected by means of at least one sensor device (7), so that a field crop start (4) and/or a field crop end (5) can be identified, wherein, as a result of the identification of a field crop start (4) and/or a field crop end (5), at least one operating parameter of the combine harvester (1) is changed at least intermittently, wherein the method comprises the following method steps:
a) the plants of the field crop (2) are cut and fed to a threshing means (9),
b) fruits are detached from the cut plants by means of a threshing drum (10) of the threshing means (9), wherein at least a portion of the fruits is separated from remaining plant residues by a threshing concave (11) of the threshing means (9),
c) the plant residues are transferred to a separating means (12) together with remaining fruits not separated by the threshing concave (11), by means of which further fruits are separated from the plant residues,
wherein the fruits pass through sieve openings (13) of a sieve device (29) of the separating means (12) during the course of the separation by means of the separating means (12), wherein, as a result of the identification of the field crop end (5), the "Opening cross section (14) of the sieve openings (13)" operating parameter is changed, wherein preferably, the opening cross sections (14) are made smaller.

2. The method according to claim 1, **characterized in that** upon identification of a field crop start (4), an increase in a throughput of the harvested material to be processed by means of the combine harvester (1) is inferred and/or upon identification of a field crop end (5), a reduction in the harvested material throughput is inferred, wherein preferably, at least one parameter setting of at least one working unit of the combine harvester (1) is changed as a function of the inference pertaining to the harvested material throughput.

3. The method according to claim 1, **characterized in that** during the course of the separation by means of the separating means (12), the fruits pass through sieve openings (13) of a sieve device (29) of the separating means (12), wherein, as a result of the identification of the field crop start (4), the "Opening cross section (14) of the sieve openings (13)" operating parameter is changed, wherein preferably, the opening cross sections (14) are enlarged.

4. The method according to one of claims 1 to 3, **characterized in that** light components of the plant residues are separated from the fruits in accordance with the air separation principle by means of at least one fan (15), wherein, as a result of the identification of the field crop end (5), the "Speed of the fan (15)" operating parameter is changed; preferably, the speed of the fan (15) is reduced.

5. The method according to claim 4, **characterized in that**, as a result of the identification of the field crop start (4), the "Speed of the fan (15)" operating parameter is changed; preferably, the speed of the fan (15) is increased.

6. The method according to one of claims 1 to 5, **characterized in that**, as a result of the identification of the field crop end (5), the "Distance (16) between threshing concave (11) and threshing drum (10)" operating parameter is changed; preferably, the distance (16) is reduced.

7. The method according to claim 6, **characterized in that**, as a result of the identification of the field crop start (4), the "Distance (16) between threshing concave (11) and threshing drum (10)" operating parameter is changed; preferably, the distance (16) is increased.

8. The method according to one of claims 1 to 7, **characterized in that**, as a result of the identification of the field crop end (5), the "Speed of the threshing drum (10)" operating parameter is changed; preferably, the speed is reduced.

9. The method according to claim 8, **characterized in that**, as a result of the identification of the field crop start (4), the "Speed of the threshing drum (10)" operating parameter is changed; preferably, the speed is increased.

10. The method according to one of claims 1 to 9, **characterized in that** the front region (8) of the combine harvester (1) is detected by means of the sensor device (7) in a contactless manner, preferably optically.

11. The method according to one of claims 1 to 10, **characterized in that** the change of the at least one operating parameter is carried out, preferably continuously, starting from a starting value to a target value over a change period.

12. The method according to one of claims 1 to 11, **characterized in that** after identification of the field crop start (4) or field crop end (5), a start time is planned at which the change of the at least one operating parameter should be implemented or at least should have begun.

13. The method according to claim 12, **characterized in that** between an identification time, at which the field crop start (4) or the field crop end (5) is identified, and the start time of the change of the operating parameter, an intermediate period is planned which is preferably at least 1 second, more preferably at least 5 seconds.

14. A self-propelled combine harvester (1) for harvesting a field crop (2) of plants disposed on a field which are to be harvested, wherein the combine harvester is configured to carry out the method according to claim 1, comprising
- a cutting means (17) for cutting the plants of the field crop which are to be harvested,
- a threshing means (9) for detaching fruits from the plants, as well as
- a separating means (12) for separating fruits from plant residues,
wherein the threshing means (9) has a threshing drum (10) and a threshing concave (11) which are disposed at a distance (16) with respect to each other and together delimit a guide gap (18) for guiding a flow of harvested material,
wherein the separating means (12) has at least one sieve device (29) with a plurality of sieve openings (13) by which fruits are separated and are separated from the plant residues in this manner,
at least one sensor device (7) for detecting a front region (8) of the combine harvester (1), the sensor device being located in front of the cutting means (17) considered in the direction of travel of the combine harvester (1),
at least one computing unit (19), by means of which the data acquired by the sensor device (7) are processed, as well as at least one actuator (20) which can be controlled by means of the computing unit (19), by means of which at least one operating parameter of the combine harvester (1) is changed, wherein the at least one actuator (20) cooperates with the separating means (12) in a manner such that, as a result of an actuation of the actuator (20), opening cross sections (14) of the sieve openings (13) can be changed.

15. The combine harvester (1) according to claim 14, **characterized in that** the sensor device (7) is formed by a camera, by means of which the front region (8) of the combine harvester (1) can be detected optically.

16. The combine harvester (1) according to one of claims 14 or 15, **characterized by**
at least one fan (15), by means of which light plant residues are separated from fruits in accordance with the air separation principle, wherein at least one actuator (20) cooperates with the fan (15) in a manner such that a speed of the fan (15) is changed as a result of an actuation of the actuator (20).

17. The combine harvester (1) according to one of claims 14 to 16, **characterized in that** at least one actuator (20) cooperates with the threshing means (9) in a manner such that a distance (16) between the threshing drum (10) and the threshing concave (11) is changed as a result of an actuation of the actuator (20).

18. The combine harvester (1) according to one of claims 14 to 17, **characterized in that**
at least one actuator (20) cooperates with the threshing means (9) in a manner such that a speed of the threshing drum (10) is changed as a result of an actuation of the actuator (20).

## Revendications

1. Procédé de récolte d'un peuplement (2) de plantes à récolter disposé dans un champ, au moyen d'une moissonneuse-batteuse (1),
le peuplement (1) étant traité par portions (3) individuelles,
sachant que pour commencer le traitement d'une portion (3), la moissonneuse-batteuse (1) entre dans le peuplement (2) au début d'un peuplement (4), et/ou, lorsqu'elle termine le traitement d'une portion (3) à la fin d'un peuplement (5), elle sort du peuplement (2),
sachant qu'à la fin du traitement d'une portion (3) respective, la moissonneuse-batteuse (1) fait demi-tour dans une tournière (6) du champ et commence ensuite le traitement d'une autre portion (3),
sachant qu'une zone avant (8) de la moissonneuse-batteuse (1) est détectée à l'aide d'au moins un dispositif de capteur (7), de façon à permettre la détection d'un début de peuplement (4) et/ou d'une fin de peuplement (5),
sachant que suite à la détection d'un début de peuplement (4) et/ou d'une fin de peuplement (5), au moins un paramètre de fonctionnement de la moissonneuse-batteuse (1) est modifié au moins de façon temporaire, le procédé comprenant les étapes suivantes :
a) les plantes du peuplement (5) sont coupées et acheminées à un organe batteur (9),
b) des fruits sont séparés des plantes coupées, à l'aide d'un tambour batteur (10) de l'organe batteur (9), où au moins une partie des fruits est séparée de résidus de plantes restants à travers un contre-batteur (11) de l'organe batteur (9),
c) les résidus de plantes sont transférés à un organe séparateur (12), conjointement avec des fruits résiduels qui n'ont pas été séparés par le contre-batteur (11), lequel organe séparateur assure la séparation de fruits supplémentaires des résidus de plantes,
sachant que dans le cadre de la séparation au moyen de l'organe séparateur (12), les fruits traversent des ouvertures de tamis (13) d'un dispositif de tamisage (29) de l'organe séparateur (12), où suite à la détection de la fin de peuplement (5), le paramètre de fonctionnement « sections d'ouverture (14) des ouvertures de tamis (13) » est modifié, les portions d'ouverture (14) étant de préférence diminuées.

2. Procédé selon la revendication 1, **caractérisé en ce que** lors de la détection d'un début de peuplement (4), il est conclu à une augmentation d'un débit de récolte à traiter par la moissonneuse-batteuse (1), et/ou lors de la détection d'une fin de peuplement (5), il est conclu à une diminution du débit de récolte, sachant qu'en fonction de la conclusion concernant le débit de récolte, de préférence au moins un réglage de paramètre d'au moins un organe de travail de la moissonneuse-batteuse (1) est modifié.

3. Procédé selon la revendication 1, **caractérisé en ce que** dans le cadre de la séparation au moyen de l'organe séparateur (12), les fruits traversent des ouvertures de tamis (13) d'un dispositif de tamisage (29) de l'organe séparateur (12), sachant que suite à la détection du début de peuplement (4), le paramètre de fonctionnement « sections d'ouverture (14) des ouvertures de tamis (13) » est modifié, les sections d'ouverture (14) étant de préférence augmentées.

4. Procédé selon une des revendications 1 à 3, **caractérisé en ce que** des constituants légers des résidus de plantes sont séparés des fruits à l'aide d'au moins un ventilateur (15) selon le principe du triage par courant d'air, où suite à la détection de la fin de peuplement (5), le paramètre de fonctionnement « vitesse de rotation du ventilateur (15) » est modifié, la vitesse de rotation du ventilateur (15) étant de préférence réduite.

5. Procédé selon la revendication 4, **caractérisé en ce que** suite à la détection du début de peuplement (4), le paramètre de fonctionnement « vitesse de rotation du ventilateur (15) » est modifié, la vitesse de rotation du ventilateur (15) étant de préférence augmentée.

6. Procédé selon une des revendications 1 à 5, **caractérisé en ce que** suite à la détection de la fin de peuplement (5), le paramètre de fonctionnement « distance (16) entre le contre-batteur (11) et le tambour batteur (10) » est modifié, la distance (16) étant de préférence réduite.

7. Procédé selon la revendication 6, **caractérisé en ce que** suite à la détection du début de peuplement (4), le paramètre de fonctionnement « distance (16) entre le contre-batteur (11) et le tambour batteur (10) » est modifié, la distance (16) étant de préférence augmentée.

8. Procédé selon une des revendications 1 à 7, **caractérisé en ce que** suite à la détection de la fin de peuplement (5), le paramètre de fonctionnement « vitesse de rotation du tambour batteur (10) » est modifié, la vitesse de rotation étant de préférence réduite.

9. Procédé selon la revendication 8, **caractérisé en ce que** suite à la détection du début de peuplement (4), le paramètre de fonctionnement « vitesse de rotation du tambour batteur (10) » est modifié, la vitesse de rotation étant de préférence augmentée.

10. Procédé selon une des revendications 1 à 9, **caractérisé en ce que** la zone avant (8) de la moissonneuse-batteuse (1) est détectée sans contact à l'aide du dispositif de capteur (7), de préférence par voie optique.

11. Procédé selon une des revendications 1 à 10, **caractérisé en ce que** la modification du paramètre de fonctionnement, au nombre d'au moins un, s'effectue à partir d'une valeur de départ vers une valeur cible au cours d'une durée de modification, de préférence de manière continue.

12. Procédé selon une des revendications 1 à 11, **caractérisé en ce que**, après la détection du début de peuplement (4) ou de la fin de peuplement (5), un instant de début est planifié, où la modification du paramètre de fonctionnement, au nombre d'au moins un, doit être effectuée ou au moins commencée.

13. Procédé selon la revendication 12, **caractérisé en ce qu'**on planifie, entre un instant de détection, où le début de peuplement (4) ou la fin de peuplement (5) sont détectés, et l'instant de début de la modification du paramètre de fonctionnement, un intervalle de temps intermédiaire qui est de préférence d'au moins une seconde, et notamment de préférence d'au moins 5 secondes.

14. Moissonneuse-batteuse (1) automotrice destinée à la récolte d'un peuplement (2) de plantes à récolter disposé dans un champ, la moissonneuse-batteuse étant agencée pour la mise en œuvre du procédé selon la revendication 1, comprenant
- un organe de coupe (17) destiné à couper les plantes du peuplement devant être récoltées,
- un organe batteur (9) destiné à détacher les fruits des plantes, et
- un organe séparateur (12) destiné à séparer les fruits des résidus de plantes,
l'organe batteur (9) présentant un tambour batteur (10) et un contre-batteur (11) qui sont disposés à distance (16) l'un de l'autre et délimitent ensemble un espace de guidage (18) pour le guidage d'un flux de récolte,
l'organe séparateur (12) présentant au moins un dispositif de tamisage (29) doté d'une pluralité d'ouvertures de tamis (13) à travers lesquelles les fruits sont évacués et séparés ainsi des résidus de plantes,
au moins un dispositif de capteur (7) destiné à détecter une zone avant (8) de la moissonneuse-batteuse (1), qui se situe devant l'organe de coupe (17), vu dans le sens de l'avancement de la moissonneuse-batteuse (1),
au moins une unité de calcul (19) à l'aide de laquelle sont traitées les données détectées par le dispositif de capteur (7), ainsi que
au moins un actionneur (20) qui peut être actionné à l'aide de l'unité de calcul (19) et avec lequel au moins un paramètre de fonctionnement de la moissonneuse-batteuse (1) est modifié, l'actionneur (20), au nombre d'au moins un, coopérant avec l'organe séparateur (12) de manière à ce que, suite à une activation de l'actionneur (20), des sections d'ouverture (14) des ouvertures de tamis (13) puissent être modifiées.

15. Moissonneuse-batteuse (1) selon la revendication 14, **caractérisée en ce que** le dispositif de capteur (7) est constitué d'une caméra à l'aide de laquelle la zone avant (8) de la moissonneuse-batteuse (1) est détectée optiquement.

16. Moissonneuse-batteuse (1) selon une des revendications 14 ou 15, **caractérisée en ce qu'**elle présente au moins un ventilateur (15) avec lequel des résidus de plantes légers sont séparés des fruits selon le principe du triage par courant d'air, au moins un actionneur (20) coopérant avec le ventilateur (15) de manière à ce que, suite à une activation de l'actionneur (20), une vitesse de rotation du ventilateur (15) soit modifiée.

17. Moissonneuse-batteuse (1) selon une des revendications 14 à 16, **caractérisée en ce qu'**au moins un actionneur (20) coopère avec l'organe batteur (9) de manière à ce que, suite à une activation de l'actionneur (20), une distance (16) entre le tambour batteur (10) et le contre-batteur (11) soit modifiée.

18. Moissonneuse-batteuse (1) selon une des revendications 14 à 17, **caractérisée en ce qu'**au moins un actionneur (20) coopère avec l'organe batteur (9) de manière à ce que, suite à une activation de l'actionneur (20), une vitesse de rotation du tambour batteur (10) soit modifiée.
